# EUROPÄISCHE PATENTSCHRIFT

(11) **EP 0 774 337 B1**
(45) Veröffentlichungstag und Bekanntmachung des Hinweises auf die Patenterteilung: **12.12.2001**
(21) Anmeldenummer: 96117669.0
(22) Anmeldetag: 05.11.1996
(51) Int. Cl.: B29C 47/50

(54) **Verfahren zum Herstellen von Formkörpern aus Kunststoff-Füllstoff-Mischungen mit einem hohen Gehalt an Füllstoffen**
Method of producing articles from a resin-filler mixture having high filler content
Procédé pour la fabrication d'objets à partir d'un mélange de plastique et de matière de remplissage, contenant une grande quantité de matière de remplissage

(30) Priorität: 16.11.1995 DE 19542721
(43) Veröffentlichungstag der Anmeldung: 21.05.1997
(73) Patentinhaber: SGL CARBON AG, 65203 Wiesbaden (DE)
(72) Erfinder: Tetzlaff, Ernst, Prof. Dr. Ing., 89518 Heidenheim (DE); Schmid, Manfred, 86156 Augsburg (DE)

(56) Entgegenhaltungen:
- DE-A- 2 351 328
- US-A- 3 008 187
- US-A- 4 885 457
- PATENT ABSTRACTS OF JAPAN vol. 017, no. 336 (M-1435), 25.Juni 1993 & JP 05 042582 A (FURUKAWA ELECTRIC CO LTD:THE), 23.Februar 1993,
- PATENT ABSTRACTS OF JAPAN vol. 96, no. 001 & JP 08 001663 A (SHIN ETSU POLYMER CO LTD), 9.Januar 1996,

## Beschreibung

Die Erfindung betrifft ein Verfahren zum Herstellen von Formkörpern durch Strangpressen von Kunststoff-Füllstoff-Mischungen nach dem Oberbegriff des Patentanspruchs 1 und einen Extruder zum Durchführen des Verfahrens nach dem Oberbegriff des Patentanspruchs 32 sowie die Verwendung einer nach dem Verfahren gemäß Anspruch 16 hergestellten platte.

Durch den Zusatz von Füllstoffen kann das Eigenschaftsprofil von Kunststoffen verändert und in der Regel verbessert werden. Verbesserungen dieser Art betreffen beispielsweise die Verarbeitbarkeit der Kunststoffe oder die Eigenschaften der aus solchen Kunststoff-Füllstoff-Zusammensetzungen hergestellten Produkte wie E-Modul, Schlagzähigkeit, Maßhaltigkeit oder Wärmestandsfestigkeit. So wird in US 4,885,457 die Herstellung von Formkörpern durch Strangpressen von Kunststoff-Füllstoff-Mischungen beschrieben, bei dem zunächst eine Mischung aus einem Kunststoff, indem fein verteilt leitfähige Füllerpartikel enthalten sind, durch ein Schmelzprozeß oder einem Mischen in einer Lösung hergestellt wird, die dann extrudiert wird. Solange der Gehalt an Füllstoffen ein bestimmtes Maß nicht überschreitet, treten bei der Verformung der Kunststoff-Füllstoff-Massen zu Zwischen- oder Endprodukten keine Probleme auf. Von einem bestimmten Gehalt an Füllstoffen ab verschlechtern sich die Fließeigenschaften derartiger Massen jedoch zunehmend und deren Verarbeitbarkeit wird immer schwieriger. Besonders problematische Auswirkungen hat dies beim Strangpressen. Bei hohen Füllstoffgehalten werden die zum Hervorrufen eines Scherfließens notwendigen Grenzschubspannungen schnell unverhältnismäßig hoch und für das Extrudieren sind sehr hohe Kräfte notwendig. Extrusionsaufgaben dieser Art sind nur mit einer entsprechend aufwendigen maschinentechnischen Ausstattung, d.h. mit Spezialmaschinen zu bewältigen und in vielen Fällen können derartige Massen überhaupt nicht stranggepreßt werden. Hoch füllstoffhaltige Kunststoffmassen haben außerdem eine geringe Schmelzdehnbarkeit. Beim Austritt aus dem Düsenformwerkzeug kommt es deshalb insbesondere beim Strangpressen von flächenhaften Körpern oder auch von Rohren zu Schäden wie Rissen oder rauhen bzw. schuppigen Oberflächen.

Um auch bei schwierigen Anwendungen auf die kostengünstige Technologie des Extrudierens zurückgreifen zu können, wurden verschiedene Typen von speziellen Extruderanlagen entwickelt. So wird in der deutschen Offenlegungsschrift DE 23 51 328 A ein Extruder beschrieben, mit dem Kunststoffabfälle zerkleinert, mit Neumaterial vermischt und die Mischung anschließend als neuwertiger Kunststoff extrudiert wird. Neben den gewöhnlichen Bestandteilen weist der dabei verwendete Extruder eine an zwei Einfüllöffnungen für die Abfälle und das Neumaterial anschließende, mantelinnenseitig mit Längsnuten versehene Zone als förderwirksame Einzugszone, in der eine drehbar angeordnete Förderschnecke den Abfall zerkleinert und mit dem zugesetzten Neumaterial zu einer extrudierbaren Masse vermischt, und eine zweite, sich an die erste Zone anschließende Ausstoßzone auf. Die Ausstoßzone ist beheizbar und beinhaltet ebenfalls eine mit der Förderschnecke der Einzugzone verbundene Förderschnecke, die jedoch zumeist eine andere Steigung aufweist. In der Ausstoßzone findet der eigentliche Extrudiervorgang unter Erwärmung der Mischung statt. Weiterhin ist ein Extruder, der eine mantelinnenseitig mit Längsnuten versehene Zone aufweist, auch in der Patentschrift US 3,008,187 beschrieben. Dieser Extruder dient zur Herstellung von PTFE- Rohren hoher Qualität und weist an der Endzone ein Mundstück zur Formgebung auf.

Ferner ist aus der JP-A-05-042 582 ein mehr stufige Extruder vorrichtung bekannt, bei welcher der geschmolzene thermoplatische kumststoff nach einem ersten Extruder granuliert und in einem zweiten Extruder ein Additiv zugeführt wird. Daran anschließend erfolgt das Gießen zu einem Formkörper.

Der Erfindung liegt die Aufgabe zugrunde, wenigstens für eine Gruppe solcher, hohe Anteile an Füllstoffen enthaltender Kunststoffe ein Verfahren und eine Vorrichtung bereitzustellen, mit Hilfe derer aus solchen Massen eine Herstellung fehlerfreier Formkörper, insbesondere von Rohren oder dünnen Platten, aber auch von anderen Profilen durch Strangpressen möglich ist.

Die Aufgabe wird durch ein Verfahren gemäß dem Anspruchs 1 and durch einen Extruder gemäß Anspruch 32 gelöst. In den jeweils nachgeordneten Ansprüchen sind vorteilhafte Ausgestaltungen der Erfindung angegeben. Die Anspruchstexte werden hiermit in die Beschreibung der Erfindung eingeführt.

Die Erfindung betrifft Kunststoff-Füllstoff-Mischungen, in denen die Füllstoffanteile eine gute Wärmeleitfähigkeit haben. Außerdem ist sie auf Kunststoff-Füllstoff-Mischungen mit Füllstoffanteilen von mehr als 50 Volumen-% Füllstoff, bezogen auf die Kunststoff-Füllstoff-Mischung = 100 %, beschränkt. Nach einer bevorzugten Variante werden Massen mit Füllstoffgehalten von mehr als 65 Volumen-% und besonders bevorzugt solche von 75 Volumen-% und mehr verarbeitet. Kunststoff-Füllstoff-Mischungen mit Füllstoffanteilen über 95 Volumen-% sind auch nach dem hier beschriebenen Verfahren nicht mehr verarbeitbar.

Füllstoffe für nach dem erfindungsgemäßen Verfahren verarbeitbare Massen sind insbesondere nicht graphitischer und graphitischer Kohlenstoff wie Kokse, Ruß, künstlicher und Naturgraphit, gemahlener, mit Kohlenstoffasern verstärkter Kohlenstoff (CFRC) oder keramische Materialien wie Siliciumcarbid (SiC), mit Silicium infiltriertes SiC (SiSiC), Bornitrid (BN) und Titanoxide des Typs TiOₙ mit n kleiner 0,5 oder zerkleinerter, mit Kohlenstofffasern verstärkter Kunststoff oder Metalle, soweit diese mit den Kunststoffen der vorgesehenen Materialpaarung chemisch verträglich sind. Bevorzugt werden körnige und faserige kohlenstoffhaltige Füllstoffe und von diesen besonders synthetisch hergestellte graphitische Produkte verwendet. Füllstoffe aus CFRC und CFRP werden durch Mahlen von Formteilen aus CFRC oder CFRP erhalten. Sie bestehen in der Regel aus einem Gemisch aus Kohlenstofffasern, Matrixsubstanz und intakt gebliebenem verstärktem Werkstoff. Die eingesetzte Füllstoffkomponente kann auch aus Mischungen mehrerer Füllstoffe bestehen.

Die Abmessungen der als Füllstoffe verwendeten Teilchen sollen den Bereich weniger Millimeter nicht übersteigen. Körnige/pulverige Füllstoffteilchen haben bevorzugt ein größtes linear gemessenes Teilchenmaß von nicht mehr als 1 mm. Dies gilt im allgemeinen auch für faserige Füllstoffteilchen. Doch ist es hier in manchen Fällen zweckmäßig, mit Fasern bis zu Längen von ca. 5 mm zu arbeiten. Natürlich können auch größere Füllstoffteilchen in den Kunststoff eingemischt werden, doch hat dies zur Folge, daß diese Teilchen beim Mahlen nach Verfahrensschritt 2 zerkleinert werden. Sie sind dann nicht mehr vollständig von Kunststoff umhüllt. Bei Vorliegen zu großer Anteile an nicht mit Kunststoff bedeckten Bruchflächen an den Füllstoffteilchen können, besonders bei hohen Füllstoffgehalten, beim späteren Strangpressen Schwierigkeiten auftreten.

Für die Verarbeitung nach dem erfindungsgemäßen Verfahren sind alle durch Strangpressen verarbeitbaren thermoplastischen und duroplastischen Kunststoffe sowie Elastomere geeignet, sofern sie eine für die Verarbeitung in erweichtem Zustand ausreichende Temperaturbeständigkeit haben. Bevorzugt eingesetzte Kunststoffe sind thermoplastisch verarbeitbare Fluor-haltige Polymere wie Copolymere aus Tetrafluorethylen mit Perfluorpropylen (FEP), Copolymerisate von Tetrafluorethylen mit Perfluoralkylvinylether (PFA), Copolymerisate aus Ethylen und Tetrafluorethylen (ETFE), Polyvinylidenfluorid (PVDF), Polychlortrifluorethylen etc., Polyolefine wie Polyethylen oder Polypropylen, Cycloolefin-Copolymere wie Norbyliden-Ethylen-Copolymerisate und andere mit Metallocen-Katalysatoren hergestellte Copolymere dieses Typs, Polyamide, thermoplastisch verarbeitbare Polyurethane, Silicone, Novolake, Polyarylsulfide wie Polyphenylensulfid (PPS), Polyaryletherketone, die eine Dauertemperaturbeständigkeit nach DIN 51 005 von mindestens 80 °C aufweisen. Besonders bevorzugt werden Kunststoffe auf Polyvinyliden- und Cycloolefinbasis verwendet. Es können auch Mischungen miteinander kombinierbarer Kunststoffe angewandt werden, wenn dies beispielsweise zur Verbesserung der Verarbeitbarkeit oder zur Optimierung der Produkteigenschaften vorteilhaft ist.

Zur Durchführung des ersten Verfahrensschrittes werden der vorgegebenen Rezeptur entsprechend die Kunststoff- und die Füllstoffkomponente in einen heizbaren Mischer gefüllt und dort solange mindestens bei der Schmelztemperatur der Kunststoffkomponente, vorzugsweise bei Temperaturen, bei denen der Kunststoff eine für den Mischvorgang ausreichend geringe Viskosität hat, gemischt, bis der Kunststoff geschmolzen ist und die Füllstoffpartikel gleichmäßig über die gesamte Mischung verteilt sind. Falls es zur Durchführung eines der oder mehrerer der Verfahrensschritte oder für die Eigenschaften des Endprodukts notwendig oder förderlich ist, können dem Mischgut vor oder während des Mischprozesses Hilfsmittel wie Stabilisatoren, Benetzungshilfsmittel, Pigmente, Weichmacher oder Gleithilfsmittel zugesetzt werden. Als Mischer eignen sich alle diskontinuierlich oder kontinuierlich arbeitenden Mischer, die in der Lage sind, die infolge des großen Füllstoffgehalts sehr hochviskosen pseudoplastischen Massen zu verarbeiten. Bevorzugt kommen hier temperier-, meistens nur heizbare Schaufel- oder Z-Armkneter mit oder ohne Druckstempel oder für große Mengen z.B. Doppelschneckenkneter des ZSK-Typs oder Ko-Kneter in Frage. Es ist auch möglich, die zum Aufheizen der Masse erforderliche Energie auf mechanischem Wege über die Mischorgane durch Scherkräfte in dem zu mischenden Gut selbst zu erzeugen, doch ist dieses Verfahren wegen der durch die gute Wärmeleitfähigkeit des Fülleranteils bedingten erhöhten Wärmeableitung im allgemeinen nicht günstig. Nach dem Mischen wird die Mischung aus dem Mischer ausgetragen und erkalten gelassen.

Um die Kunststoff-Füllstoff-Mischung in eine für das Extrudieren geeignete Form zu bringen, wird sie im dritten Schritt des erfindungsgemäßen Verfahrens auf Partikelgrößen zerkleinert oder nach der Zerkleinerung auf Partikelgrößen klassiert, die eine Verarbeitung gemäß Verfahrensschritt 4 ermöglichen. Dazu wird die Masse in Fällen, wo es erforderlich ist, zuerst gebrochen und dann gemahlen. Im allgemeinen hat die Masse jedoch eine Konsistenz, die ein sofortiges Aufgeben auf eine Mühle gestattet. Zum Zerkleinern werden bevorzugt für mittelharte bis weiche Aufgabegüter geeignete, mittels Prall- oder Schlagwirkung arbeitende Maschinen wie Schlagstift-, Schlagkreuz- oder Hammermühlen verwendet. Bei diesem Verfahrensschritt soll aus Gründen der Wirtschaftlichkeit danach getrachtet werden, den Anteil an der Feinkornfraktion von unter 0,1 mm gering zu halten, da ein zu hoher Feinkornanteil das Entlüften bei der nachfolgenden Verarbeitung im Extruder behindern kann. Man geht deshalb in bekannter Weise so vor, daß das Mahlaggregat mit einer Klassiereinrichtung gekoppelt und nur der Grobkornanteil, der bevorzugt eine Korngröße von > 1 mm hat, zur weiteren Zerkleinerung wieder in dieses Aggregat zurückgeführt wird. Wo dies günstig ist, kann die Grenze für die Festlegung des Grobkornbereichs auch zu größeren Werten verschoben sein. Nach einer bevorzugten Variante der Erfindung werden Körnungen im Bereich zwischen 0,1 und 0,315 mm für das Strangpressen verwendet. Nach einer anderen bevorzugten Variante wird ein in geeigneter Weise vorgebrochenes Mischgut auf eine Mühle aufgegeben, in dieser durch eine "Pauschalmahlung" ein Gut ermahlen, sodann, falls notwendig, dessen unter 0,1 mm Siebdurchlaß liegender Feinkornanteil durch Klassieren auf einen Gehalt von kleiner gleich 25 Gew.-% gesenkt und dieses Pauschalmahlgut dem vierten Verfahrensschritt zugeführt.

Die durch den dritten Verfahrensschritt erhaltene, zerkleinerte und gegebenenfalls klassierte Kunststoff-Füllstoff-Mischung wird im vierten Verfahrensschritt wieder aufgeschmolzen und zu Profilen stranggepreßt. Zur Durchführung dieses Verfahrensschrittes wird ein Extruder mit förderwirksamer Einzugzone, auch Extruder mit genuteter Einzugzone oder Nutbuchsenextruder oder Nutenextruder genannt, verwendet. Das Kennzeichen dieses Extrudertyps ist das Vorhandensein von im wesentlichen parallel zur Längserstreckung der Schnecke in der Einzugzone des Extruders vorhandenen Längsnuten in der Zylinderwand, die in der Regel zum Ende der Einzugzone, d.h. in Förderrichtung gesehen, konisch auslaufen. Der Querschnitt der Nuten ist üblicherweise rechteckig, kann aber, in Anpassung an besondere technische Gegebenheiten, auch andere Formen haben. Die verfahrenstechnische Besonderheit dieses Extrudertyps ist es, daß sich das in den Einzugs- und Förderraum des Extruders eingebrachte Schüttgut in den Nuten formschlüssig verkeilt, wodurch der Reibungsbeiwert der Masse an der Zylinderwand stark erhöht und damit eine Bewegung der Masse in Umfangsrichtung unmöglich gemacht wird. Die Masse wird deshalb durch die über die Schubflanken der Schnecke wirkenden Kräfte praktisch ausschließlich in axialer Richtung gefördert. Bei der Verfahrensweise nach dem Stand der Technik wird die Masse in der genuteten Einzugzone gekühlt oder nur leicht temperiert, denn es darf sich auf der Zylinderwand kein Schmelzefilm bilden. Träte dies dennoch ein, würde die Masseförderung zum Erliegen kommen, weil der Reibungsbeiwert Masse/Buchsenwand gegenüber demjenigen der Paarung Schnecke/Masse zu niedrig werden würde und die Masse infolgedessen im Zylinder der Eingangszone nur mehr rotieren würde. Dagegen wird beim Verfahren nach der Erfindung die Nutenbuchse und, wo dies erforderlich ist, auch die Schnecke durch geeignete Heizeinrichtungen auf eine Temperatur eingestellt, die im Falle von amorphen Kunststoffen oberhalb der Glasübergangstemperatur und im Falle von teilkristallinen Kunststoffen oberhalb der Kristallitschmelzbereichstemperatur der verwendeten Kunststoffe liegt. Dadurch wird das in die Einzugzone des Extruders eingebrachte körnige Kunststoff-Füllstoff-Material durch Wärmeübertragung von den masseberührten Oberflächen des Zylinders der Einzugzone und gegebenenfalls der Schnecke und durch die mit dem Fördervorgang in der Einzugzone einhergehende Reibung an den vorgenannten Oberflächen erwärmt und am Ende dieser Zone verdichtet. Im allgemeinen muß die Schnecke nicht beheizt werden und bei Vorliegen einer besonders starken Reibung zwischen der Masse und der Oberfläche der Schnecke kann es sogar möglich sein, daß über die Temperiereinrichtung der Schnecke auch Wärme abgeführt werden muß. Bei dem in der Einzugzone stattfindenden Förder- und Verdichtungsvorgang muß dafür Sorge getragen werden, z.B. durch eine geeignete Kornzusammensetzung des in die Einzugzone gegebenen Guts, daß die Masse ausreichend entlüftet wird, d.h., daß das im aufgegebenen Gut befindliche Gas in Richtung einer Entlüftungsöffnung, beispielsweise des Aufgabestutzens, entweichen kann. Infolge der guten Wärmeleitfähigkeit der erfindungsgemäßen Kunststoff-Füllstoff-Massen wird eine gute Durchwärmung des zu verarbeitenden Guts weitgehend erreicht, obwohl eine reine Pfropfenströmung vorliegt und praktisch keine Dissipationsenergie in die Masse eingebracht wird. Wegen dieser guten Verdichtung und Durchwärmung bereits am Ende der Einzugzone kann die auf die Einzugzone folgende Plastifizier- oder Kompressionszone, in der eine weitere Homogenisierung der Masse stattfindet, vergleichsweise kurz sein. Es ist gemäß der Erfindung auch nicht erforderlich, in dieser Zone außer einer normalen Gestaltung der Schnecke besondere Scher- oder Knetelemente vorzusehen. Am Übergang von der Einzugzone zur Plastifizier-/Homogenisierzone muß jedoch eine Wärmetrennung vorhanden sein. Unter Wärmetrennung wird eine wärmetechnische Isolierung der Heizung(en) und, soweit technisch möglich, aller wärmeübertragenden Elemente zwischen den in Betracht kommenden Verfahrenszonen verstanden. Es ist so möglich, die Temperatur der im Extruder befindlichen Masse an die Erfordernisse in den einzelnen Verfahrenszonen individuell anzupassen. In dieser zweiten Verfahrenszone muß die Temperaturführung so eingeregelt werden, daß die Masse weiter thermisch homogenisiert wird.

Auf die Plastifizier-/Homogenisierzone folgt die an ihrem Ende das Düsenformwerkzeug oder Mundstück tragende Ausstoßzone, die gemäß dem Stand der Technik ausgeführt ist. Sie muß mit einer regelbaren Heizung ausgestattet sein, um für den Strangpreßvorgang optimale Temperaturbedingungen einstellen zu können. Auch zwischen der Plastifizier-/Homogenisierzone und der Ausstoßzone ist eine Wärmetrennung vorhanden. In der Ausstoßzone wird die in den Vorstufen plastifizierte und thermisch homogenisierte Masse mittels des am mundstückseitigen Ende der Einzugzone aufgebauten Druckes auf das Mundstück zubewegt und durch dieses zu einem Profilstrang geformt. Für Vollprofile werden Mundstücke üblicher Ausführungsform verwendet. Für das Strangpressen von Rohren werden Mundstücke mit einem steglosen, beheizbaren Dorn eingesetzt. Der Dorn ist hier als Verlängerung der Schnecke des Extruders ausgebildet und rotiert mit dieser. Er ist mit einer der aus dem Stand der Technik bekannten, regelbaren Heizungen ausgestattet, mit der eine Dorntemperatur eingestellt werden kann, die einen möglichst geringen Reibungsbeiwert zwischen der zu extrudierenden Masse und der Dornoberfläche gewährleistet. Falls es notwendig ist, ist die Innenwand des Rohrmundstücks, ähnlich der Innenwand des Zylinders der Einzugzone, mit in Richtung der Mundstücksöffnung auslaufenden Längsnuten versehen, um ein Rotieren der Masse im Mundstück zu verhindern. Über Stege im Mundstück gehaltene Dorne sind für die vorgenannten Kunststoff-Füllstoff-Massen nicht verwendbar, da die das Mundstück durchfließende Masse an den Stegen zerteilt wird und sich infolge ihrer geringen Schmelzverarbeitbarkeit nach den Stegen nicht wieder oder nicht wieder fehlerfrei miteinander verbinden würde.

Bei Kunststoff-Füllstoff-Massen mit besonders hohen Anteilen an Füllstoffen oder solchen mit verhältnismäßig großen Füllstoffpartikeln verbleiben nach dem im dritten Verfahrensschritt durchgeführten Zerkleinern nicht mit Kunststoff überzogene "freie" Bruchflächen. Diese Bruchflächen können Ursache für mangelndes Fließverhalten der Masse im Extruder und für eine schlechte Fähigkeit der Kunststoff-Füllstoff-Masse, sich miteinander zu verbinden oder zusammenzuhalten sein. Schwierigkeiten dieser Art kann, wo dies von den Eigenschaften des späteren Fertigprodukts her möglich ist, begegnet werden, indem dem zerkleinerten oder dem zerkleinerten und klassierten Gut arteigener Kunststoff, d.h. der in der Mischung verwendete Kunststoff oder ein dem in der Mischung verwendeten Kunststoff artverwandter Kunststoff, vorzugsweise in feinteiliger Form, in einer Menge zugegeben wird, die dem Bedeckungsbedarf der durch das Zerkleinern entstandenen freien Oberflächen an den Füllstoffpartikeln in etwa entspricht. Die hierzu notwendigen zuzusetzenden Mengen an Kunststoff betragen bis zu 8 Gewichtsprozent, bezogen auf die zur Extrusion vorgesehene Kunststoff-Füllstoff-Masse. Welche Menge genau angewandt werden muß, muß der Fachmann anhand einfach durchzuführender Extrusionsversuche von Fall zu Fall feststellen.

Die geringe Schmelzverarbeitbarkeit bzw. Schmelzedehnbarkeit der nach diesem Verfahren verarbeitbaren Massen läßt auch das Strangpressen von breiteren Bändern oder Platten mit einem kleinen Verhältnisfaktor von Höhe zu Breite, d.h. von flachen Bändern oder Platten, z.B. durch eine Breitschlitzdüse, nicht zu, da beim Extrudieren Fehler, speziell von der Mitte der Platten ausgehende Risse entstehen. Eine Herstellung von Bändern oder Platten dieser Art ist nach einer Variante der Erfindung trotzdem möglich, wenn die Masse durch ein für das Strangpressen eines Hohlprofils mit gebogener Außen- und Innenkontur bestimmtes Mundstück extrudiert wird und die Wand des aus dem Mundstück austretenden Hohlstrangs, solange dieser noch verformbar ist, auf mindestens einer Seite entlang ihrer gesamten Länge durchtrennt und der aufgeschnittene Hohlstrang in die Ebene zu einem Band gebogen und dieses gegebenenfalls danach zu Platten gewünschter Länge zerschnitten wird. Selbstverständlich können Platten nach diesem Verfahren auch hergestellt werden, indem die Wände von entsprechenden Hohlprofilen zu einem späteren Zeitpunkt entlang ihrer Länge durchtrennt und die so erhaltenen Körper zu Platten geformt werden. Allerdings müssen dann die Hohlprofile oder die aufgeschnittenen Hohlprofile erst wieder auf Verformungstemperatur erhitzt werden. Ein ähnliches Verfahren zur Herstellung von Bändern oder Platten in Kopplung mit dem Extrudieren von Hohlprofilen ist durch die JP-OS (Hei) 06/060 886 vorbeschrieben. Im Unterschied zum Verfahren gemäß der hier beschriebenen Erfindung ist in der genannten Schrift für die Herstellung extrusionsfähiger Massen stets der Zusatz von Lösungs-, Dispersions- oder speziellen Bindemitteln erforderlich, die nach dem Formgeben erst durch Trocknen/Abdampfen entfernt werden müssen.

Platten oder Bänder, die nach der vorliegenden Erfindung hergestellt worden sind, können entweder auf einer oder auf beiden ihrer Flachseiten mit einem Profil versehen werden. Zweckmäßigerweise geschieht dies direkt im Anschluß an das Auspressen aus dem Extruder, solange der Strang noch eine ausreichende Plastizität aufweist, also im heißen Zustand. Nach einer Möglichkeit dazu wird das Profil mit einer einseitig oder mit zwei von entgegengesetzten Seiten auf das extrudierte Band oder auf die Platten wirkende (n), vorzugsweise beheizte(n) Prägewalze(n) eingepreßt, je nachdem, ob die Prägung nur einseitig oder in beide Seiten der Oberfläche eingebracht werden soll. Nach einem anderen Verfahren werden beheizte Prägestempel verwendet, die ein- oder beidseitig wirken können oder die das Profil in einer Matrize, deren Boden gegebenenfalls ein Gegenprofil trägt, einprägen. Zum Einbringen eines Profils gibt es noch weitere Verfahren, die der Fachmann kennt und benutzt. Beispielsweise können die Profile auch nach dem vollständigen Erstarren der Bahnen oder Platten durch spanende Bearbeitung auf programmgesteuerten Bearbeitungsmaschinen eingearbeitet werden. Nach einer weiteren Variante der Erfindung kann eine oder es können beide Oberflächen des Bandes oder der Platten mit einer Beschichtung versehen werden, die den Oberflächen spezielle, beispielsweise elektrische, chemische, mechanische, optische oder farbliche Eigenschaften verleiht. Besonders bevorzugt ist hier die Aufbringung einer katalytisch, insbesondere einer elektrochemisch wirkenden katalytischen Schicht, die beispielsweise Metalle oder Metallverbindungen von Elementen der VIII. Nebengruppe des Periodensystems der Elemente oder elektrisch halbleitende Substanzen enthält oder aus ihnen besteht. Nach einer weiteren vorteilhaften Variante der Erfindung wird das Beschichten zusammen mit dem Prägevorgang vorgenommen, beispielsweise mit der Prägestufe nach- oder vorgeschalteten Auftragsorganen wie Walzen, Bürsten, bzw. Sprüheinrichtungen, oder es geschieht mittels der Prägewerkzeuge selbst.

Bei dem im vorstehenden beschriebenen Verfahren wird ein Extruder verwendet, der in der Kunststoffverarbeitungstechnik im Prinzip bekannt ist. Die Erfindung besteht in der Kombination der Merkmale der Verfahrensführung mit der darauf speziell angepaßten technischen Ausgestaltung des Extruders.

Nach einer besonders bevorzugten Variante der Erfindung wird das Verfahren unter Verwendung eines modifizierten Nutbuchsenextruders durchgeführt, der zwischen den Produktaufgabeorganen und dem äußeren Mundstücksende lediglich aus zwei Zonen, nämlich der Einzugzone und der das Düsenformwerkzeug tragenden Ausstoßzone besteht. Als Produktaufgabeorgane können die dem Fachmann bekannten Vorrichtungen wie Einfülltrichter, Bandwaagen etc. verwendet werden. Wie bei bekannten Maschinen mit förderwirksamer Einzugzone ist auch hier der Zylinder in der Einzugzone auf der produktführenden Seite mit Längsnuten ausgerüstet, die in der vorbeschriebenen Weise im Zusammenwirken mit der Schnecke eine Zwangsförderung der über die Aufgabevorrichtung in die Einzugzone geförderten Masse bewirken. Die Schnecke endet am Ende der Einzugzone. Lediglich die Schneckenwelle ragt mehr oder weniger in die Ausstoßzone hinein. Sie ist im Falle der Extrusion von Rohren unter Verjüngung ihres Außendurchmessers zu einem Dorn höchstens bis zum Ende des Mundstücks geführt. Die Schneckenwelle und insbesondere deren in der Ausstoßzone befindlicher Teil sind mit einer Temperier-, vorzugsweise einer Heizeinrichtung versehen. Ohne Zwischenschaltung einer gesonderten Plastifizier-, Homogenisier- oder Kompressionszone folgt auf die Einzugzone die Ausstoßzone. Es ist jedoch wichtig für die Verfahrensführung, daß zwischen der Einzugzone und der Ausstoßzone eine Wärmetrennung vorhanden ist. Dadurch kann der Temperaturverlauf in den beiden Zonen unabhängig voneinander geregelt werden. Wenn z.B. die Massetemperatur am verfahrensseitigen Ende der Nutbuchsenzone z.B. durch die dort stattfindende Reibung zu hoch werden würde, müßte in dieser Zone soviel Wärme abgeführt werden, daß die Masse nicht geschädigt wird. Gleichwohl muß in der darauffolgenden Ausstoßzone die Temperatur der Masse so hoch gehalten werden, daß diese hinreichend fließfähig ist, so daß ein ordnungsgemäßes Auspressen gewährleistet ist. Es muß also dort geheizt werden. Bei der Durchführung des Verfahrens wird die Kunststoff-Füllstoff-Masse in der Einzugzone erfaßt und während ihres Transports in Richtung auf die Ausstoßzone zu unter fortschreitender Entlüftung zunehmend komprimiert. Am verfahrensseitigen Ende der Einzugzone ist die Masse dann praktisch vollständig entlüftet und der in ihr herrschende Druck erreicht sein Maximum. Unter diesem Druck wird die Masse in die Ausstoßzone befördert und dort unter "Druckverbrauch" durch das Mundstück extrudiert. Wegen der großen Verdichtung der Masse bereits am Ende der Einzugzone muß dafür Sorge getragen werden, daß die Abführung der im körnigen Aufgabegut befindlichen Gase, im allgemeinen Luft, in der Einzugzone sichergestellt ist. Dies geschieht neben den dem Fachmann bekannten apparativen Maßnahmen durch die im Vorstehenden beschriebene, geeignete Wahl der Kornzusammensetzung des Aufgabegutes. Besonderes Augenmerk ist hier der Einhaltung eines nicht zu hohen Feinanteils zuzuwenden. Im Unterschied zu den Extrusionsverfahren nach dem Stand der Technik wird gemäß einer bevorzugten Verfahrensvariante der Erfindung die zum Extrudieren bestimmte Mischung bereits in der Einzugzone auf Temperaturen oberhalb des Schmelzbereichs der als Matrixmaterial verwendeten Kunststoffe erhitzt. Unter dem Begriff Schmelzbereich ist bei Kunststoffen mit kristallinen Anteilen der Bereich der Kristallitschmelztemperaturen und bei amorphen Thermoplasten die Glastemperatur zu verstehen. Die Masse darf jedoch nicht so hoch erhitzt werden, daß sich im Einzugsbereich auf der Zylinderwand ein niedrig viskoser Film aus Kunststoffschmelze bildet, auf dem die übrige Kunststoff-Füller-Masse gleiten kann. In einem solchen Fall käme jede Masseförderung im Extruder zum Erliegen. Die Erwärmung und Durchwärmung der Masse im Extruder geschieht sowohl in der Einzug- wie in der Ausstoßzone durch Wärmeübertragung von den Oberflächen des beheizten Zylinders und gegebenenfalls der Schnecke, bzw. denjenigen der in der Ausstoßzone befindlichen Hülse und des Dorns, durch die Reibung der Masse an den Oberflächen der vorgenannten Komponenten der Anlage und durch die gute Wärme bzw. Temperaturleitfähigkeit der Masse. Eine Erwärmung durch Dissipation findet praktisch nicht statt. Dort, wo Überhitzungen der Masse auftreten können, wie beispielsweise am Ende der Einzugzone vor der Wärmetrennung zur Ausstoßzone, muß eine Möglichkeit zum Abführen von Wärme aus der Masse vorgesehen werden.

Die nach einer der im vorstehenden beschriebenen Verfahrensvarianten hergestellten Extrudate haben neben den durch ihre Zusammensetzung aus bestimmten Kunststoffen und Füllstoffen resultierenden Eigenschaften gute Wärmeleitfähigkeits- und elektrische Leitfähigkeitseigenschaften. Sie werden deshalb bevorzugt als Komponenten für Wärmetauscher, für thermisch geringer belastete Elektroden, beispielsweise in elektrochemischen Nachweis- oder Abscheidungsverfahren wie Elektrolysen, in Batterien oder in Brennstoffzellen oder für elektrische Zwecke wie Heizelemente oder Komponenten zum Abschirmen elektrischer Felder oder zum Ableiten elektrischer Ladungen verwendet. Bevorzugt werden erfindungsgemäß hergestellte Platten für Wärmeaustauscher und mit katalytisch wirksamen Beschichtungen ausgerüstete Platten für Brennstoffzellen verwendet.

Im folgenden wird die Erfindung anhand von Ausführungsbeispielen weiter erläutert:

### Beispiel 1:

Zur Herstellung der Kunststoff-Füllstoff-Mischung wurden als Mischungsbestandteile

| | |
|---|---|
| 768 g | gemahlener Elektrographit, Kornfraktion 0,04 bis 0,20 mm, |
| 432 g | gemahlener Elektrographit, Kornfraktion kleiner 0,01 mm und |
| 300 g | PVDF-Granulat, Typ Solef 1010 der Solvay-Kunststoffe GmbH, entsprechend 76,6 Vol.-% (80 Gew.-%) Füllstoffanteil und 23,4 Vol.-% (20 Gew.-%) Kunststoffanteil in einem Druckstempelmischer, Typ LDUK 1, Hersteller Werner & Pfleiderer, während 10 Minuten bei einer Temperatur von 230 °C unter Druckstempelauflast geknetet. |

Nach dem Austragen aus dem Mischer und Erkalten wurde die Masse in einer Feinprallmühle, Typ UPZ 24, Hersteller Hosokawa Alpine AG, gemahlen, und es wurden aus dem Mahlgut die Fraktionen kleiner 0,1 mm und 0,1 bis 0,315 mm ausgesiebt. Danach wurde ein homogenisiertes Gemenge aus 15 Gew.-% der Kornfraktion kleiner 0,1 mm und 85 Gew.-% der Kornfraktion 0,1 bis 0,315 mm mittels eines bezüglich der produktberührten Teile lediglich aus Einfüllvorrichtung, Einzugzone und Ausstoßzone (einschließlich Mundstück) bestehenden erfindungsgemäßen Extruders durch ein Rohrmundstück mit einem Hülseninnendurchmesser von 27 und einem Dornaußendurchmesser von 25 mm ausgepreßt. Der Dorn war nicht durch Stege gehalten, sondern fest mit der Förderschnecke der Einzugzone verbunden. Der Extruder war mit einer eingängigen Schnecke von einem Durchmesser von 30 mm, einer Steigung von 15 mm (≙ 0,5 d) und einer Gangtiefe von 2,5 mm ausgerüstet. Der Innenmantel des Zylinders der Einzugzone hatte, von der Mitte des Einfülltrichters aus gesehen, sechs 90 mm lange (≙ 3 d) in Richtung der Ausstoßzone mit einer Steigung von 2° 11 Minuten konisch auslaufende Rechtecknuten. Die Einzugzone war auf 210 °C, die Ausstoßzone auf 240 °C temperiert. Der Rohrstrang wurde während des Austretens aus dem Mundstück durch eine am Mundstücksende befestigte Schneide auf einer Seite kontinuierlich aufgeschnitten und in die Ebene zu einem Band gebogen. Danach wurde das Band zu Platten von einer Länge von 100 mm geschnitten, und die so erhaltenen Platten wurden in einer Walzenprägeeinrichtung bei einer Temperatur von 230 °C auf einer ihrer Seiten mit Längs- und Querrillen versehen. Die Platten hatten die in Tabelle 1 unter Beispiel 1 verzeichneten Eigenschaften. Nach der Endbearbeitung wurden sie als bipolare Elektroden in einer Brennstoffzelle verwendet.

### Beispiel 2:

Zur Herstellung der Kunststoff-Füllstoff-Mischung wurden folgende Komponenten in einem Zwangskneter mit Sigmaschaufeln zunächst 15 Minuten lang bei 220 °C ohne Stempelauflast und dann weitere 5 Minuten lang bei der gleichen Temperatur mit Stempelauflast geknetet:

| | |
|---|---|
| 835 g | Elektrographit, Kornfraktion 0,04 bis 0,2 mm, |
| 470 g | Graphitpulver KS 75, Hersteller Lonza AG und |
| 195 g | COC-Kunststoff (Cycloolefinpolymer), Typ COC 5013, Hersteller Hoechst AG, entsprechend einem Kunststoffanteil in der Gesamtmischung von 24,3 Vol.-% (13 Gew.-%). |

Nach dem Austragen aus dem Mischer und dem Erkaltenlassen wurde die in Pelletform vorliegende Masse bei Raumtemperatur auf einer Stiftmühle gemahlen und das gemahlene Gut klassiert. Danach wurde ein homogenisiertes Gemenge aus 24,75 Gewichtsteilen der Kornfraktion kleiner 0,1 mm, 74,25 Gewichtsteilen der Kornfraktion 0,1 bis 0,315 und 1 Gewichtsteil Preßhilfsmittel auf Kunststoffbasis, PED 153, Hersteller Hoechst AG, in einem prinzipiell wie im Beispiel 1 beschriebenen Extruder durch ein Rohrmundstück derselben Abmessungen wie in Beispiel 1, extrudiert. Im Unterschied zu Beipiel 1 wurde jedoch eine zweigängige Schnecke mit einer Schneckensteigung von 30 mm verwendet. Die Massetemperatur in der Ausstoßzone betrug 260 °C. Wie in Beispiel 1 vorbeschrieben, wurde der Mantel des Rohrstrangs beim Austreten aus dem Mundstück auf einer Seite kontinuierlich in Längsrichtung aufgeschnitten und das vormalige Rohr auf einer auf 240 °C temperierten Auflage zu einem Flachstrang in die Ebene gebogen. Die anschließend durch Abschneiden aus dem Strang erhaltenen Platten mit einer Länge von 80 mm wurden in einer Gesenkpresse mit heizbarem Gesenk bei einer Temperatur von 250 °C unter einem Druck von 150 bar mit einem Prägewerkzeug mit einem Nutenprofil versehen. Die physikalischen Kenndaten der so erhaltenen Platten sind aus Tabelle 1 unter Beispiel 2 ersichtlich. Platten dieses Typs wurden als Elektroden für Elektrolysezwecke verwendet.

### Beispiel 3:

In diesem Fall wurden zur Herstellung der extrudierbaren Mischung

| | |
|---|---|
| 82 | Gewichtsprozent Elektrographit, Korngröße kleiner 0,5 mm mit |
| 18 | Gewichtsprozent (≙ 28 Vol.-%) Novolak-Pulver, Typ 222 SP, Hersteller Bakelite AG, Fließgrenze bei 125 °C 55 bis 70 mm (DIN 16916-02-A), das 8 Gew.-% Hexamethylentetramin als Härter enthielt, |

in einem Z-Arm-Kneter bei Raumtemperatur gemischt. Nach dem Austragen aus dem Mischer wurde das Gemisch in einer Extruderanordnung, wie sie in Beispiel 1 beschrieben worden ist, bei einer Mundstückstemperatur von 80 °C durch ein Rohrmundstück für die Herstellung von Rohren mit den Abmessungen 25 mm Außendurchmesser und 22 mm Innendurchmesser extrudiert. Der aus dem Mundstück austretende rohrförmige Strang wurde mittels einer direkt am Mundstück angebrachten aber nicht mit dem mittigen Dorn des Mundstücks verbundenen, den äußeren Rohrdurchmesser übersteigenden Schneide längs in zwei gleiche Hälften getrennt, und diese Hälften wurden in die Ebene zu Streifen gebogen und dann zu Platten von 100 mm Länge geschnitten. Der Raum vor dem Mundstück, in dem die vorgenannte Herstellung der Platten vorgenommen wurde, war mittels eines geheizten Tisches auf ca. 75 °C temperiert. Die so hergestellten Platten wurden in einer Gesenkpresse bei einer Temperatur von 120 °C und einer Preßkraft von 100 bar zu Rippenelektroden umgeformt und danach bei 180 °C endgehärtet. Die physikalischen Kennwerte so hergestellter Platten sind in Tabelle 1 unter Beispiel 3 aufgeführt.

### Beispiel 4:

Zur Herstellung der Kunststoff-Füllstoff-Mischung wurden

| | |
|---|---|
| 1408 g | käufliches Titanpulver, Titangehalt 99,9 %, Korngröße bis 0,150 mm (bis 100 mesh) mit |
| 80 g | ≙ 5,4 Gew.-% oder 22 Vol.-% Polypropylengranulat, Typ Eltex PTL 220, Hersteller Solvay Kunststoffe GmbH |

in einem mit Druckstempel ausgerüsteten Z-Arm-Kneter unter Druckstempelauflast in einer Stickstoffatmosphäre geknetet. Nach dem Austragen aus dem Mischer und nach dem Erkaltenlassen wurde die Mischung in einer langsam laufenden Kreiselmühle, ebenfalls unter Stickstoff als Schutzgas gegen Entzündungs- und Explosionsgefahr, gemahlen, und es wurde die Fraktion kleiner 0,4 mm für das nachfolgende Extrudieren abgetrennt. Dieses Extrudieren wurde mittels einer Extrudieranordnung gemäß Beispiel 2 mit einem auf eine Temperatur von 220 °C geheizten Rohrmundstück für Rohre der Abmessungen, Durchmesser außen 25 mm, Durchmesser innen 22 mm, dessen Dorn auf ebenfalls einer Temperatur von 220 °C gehalten wurde, durchgeführt. So hergestellte Rohre wurden nach einer mechanischen Endbearbeitung als Meßelektroden für Potentialmessungen eingesetzt. Die physikalischen Kenndaten solcher Rohre sind in Tabelle 1 unter Beispiel 4 aufgeführt.

### Beispiel 5:

Zur Herstellung der Kunststoff-Füllstoffmischung wurden

| | |
|---|---|
| 1430 g | Kupferfasern, Durchmesser 10 µm, Länge 2 mm mit |
| 70 g, | ≙ 4,5 Gew.-% oder 20 Vol.-%, PVDF-Pulver, Typ Solef 1010.6001.1, Hersteller Solvay-Kunststoffe GmbH, |

bei Raumtemperatur mit einem Rührbesen, wie er auch in Haushaltsmixern verwendet wird, gemischt. Das so erhaltene Gemenge wurde sodann mittels einer Extrusionsvorrichtung gemäß Beispiel 1 bei einer Mundstückstemperatur von 240 °C zu einem Vollstrang, Höhe 1,5 mm, Breite 10 mm extrudiert. Nach dem Zerschneiden des Stranges auf die jeweils gewünschten Längen wurden die so erhaltenen Streifen als Potentialausgleichsleitungen verwendet. Die physikalischen Kennwerte dieses Produkts sind Tabelle 1 unter Beispiel 5 zu entnehmen.

Im folgenden wird die Erfindung, insbesondere die Vorrichtung zum Extrudieren, anhand von Figuren in schematischer Darstellung beispielhaft weiter erläutert.

Es zeigen:
- Fig. 1,: einen Längsschnitt entlang der Mittelachse eines erfindungsgemäßen Extruders mit förderwirksamer Einzugzone.
- Fig. 2,: einen Querschnitt durch den Einlauf eines mit Nuten versehenen Rohrmundstücks mit rotierendem Dorn entlang der Linie II-II von Fig. 1.

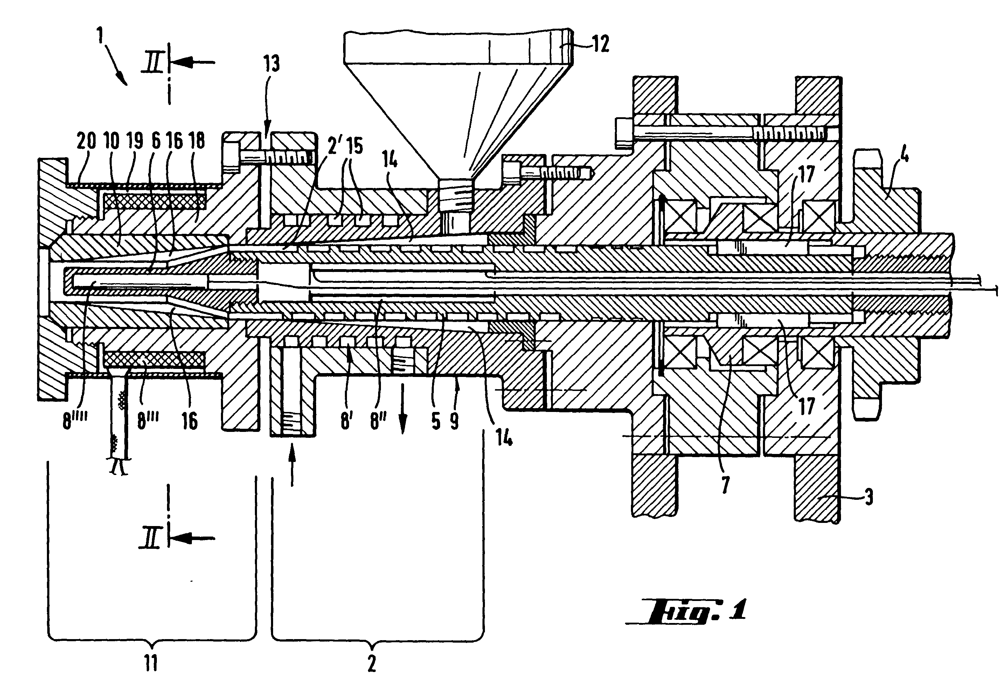

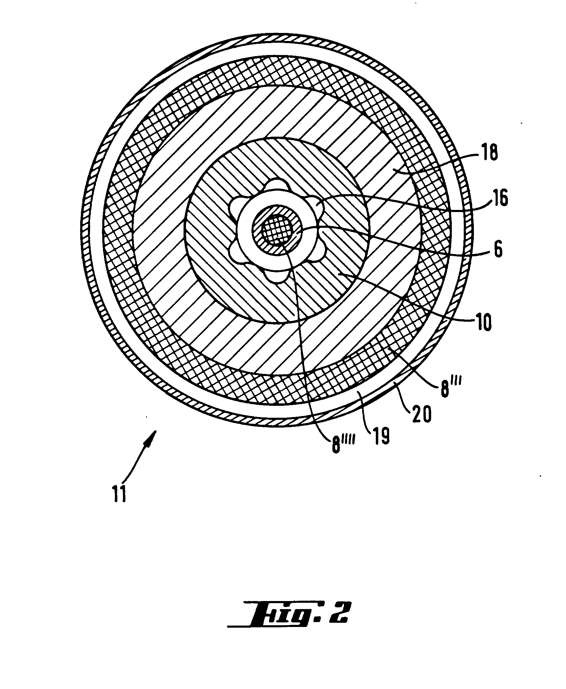

In Fig. 1 ist ein Extruder (1) mit förderwirksamer Einzugzone (2) (Nutbuchsenextruder), der im wesentlichen aus einem nur andeutungsweise wiedergegebenen Maschinengestell (3), einer ebenfalls nur andeutungsweise wiedergegebenen, hier mit einem Zahnkranz ausgerüsteten Antriebseinheit (4) für die über Paßfedern (17) mit der Schnecke (5) gekoppelten Welle (7), einer Ausstoßzone (11) und aus Temperiereinrichtungen (8),
1. für die Nutenbuchse (9) in der Einzugzone (2) (8'),
2. für die Schnecke (5) in der Einzugzone (2) (8''),
3. für das Mundstück (10) (8'''),
4. für einen im Mundstück (10) befindlichen Dorn (6) (8'''') besteht, dargestellt. Die für den Betrieb des Extruders ebenfalls notwendigen Meß- und Regeleinrichtungen, sowie weitere Peripherievorrichtungen wie beispielsweise eine Abnahmevorrichtung für das Extrudat, sind Stand der Technik und deshalb nicht wiedergegeben. Das Kennzeichen des Extruders (1) ist, daß seine produktberührten Teile, mit Ausnahme der Einfüllvorrichtung (12) für das zu extrudierende Produkt, die hier als Einfülltrichter (12) dargestellt ist, lediglich aus der Einzugzone (2) und der Ausstoßzone (11) bestehen. Eine Homogenisier- oder Kompressionszone fehlt. Ein weiteres wichtiges Merkmal ist das Vorhandensein einer Wärmetrennung (13) zwischen Einzugzone (2) und Ausstoßzone (11). Die Innenwand des Zylinders (9) der Einzugzone (2) ist mit sechs zum mundstückseitigen Ende (2') der Einzugzone konisch auslaufenden Nuten (14) von rechteckigem Querschnitt ausgerüstet, von denen in der vorliegenden Darstellung nur zwei zu sehen sind. Desweiteren enthält der Zylinder (9) Kanäle (15) für das Durchleiten eines Wärmeträgermediums zum Temperieren, im wesentlichen zum Heizen der Nutenbuchse (9) (Temperiereinrichtung 8'). Diese Temperiereinrichtung (8') kann auch aus mehr als einer Zone bestehen, um die zu extrudierende Masse gezielter temperieren zu können. Gegebenenfalls wird die Masse in Nähe des mundstückseitigen Endes (2') der Einzugzone (2) zum Vermeiden schädlicher Überhitzungen sogar gekühlt. Die in der Einzugzone (2) befindliche eingängige Schnecke (5) ist innen hohl. Sie (5) kann mit einer mittels einer mit einem Wärmeträgermedium arbeitenden, zum Kühlen oder Heizen geeigneten Temperiereinrichtung (8'') ausgerüstet sein. Die Temperiereinrichtung (8''') der Ausstoßzone (11) besteht aus einer Heizbandage. Der für den Fall des Extrudierens von Hohlsträngen vorhandene und mit der Schnecke (5) drehfest verbundene und zentrisch im Mundstück 10 positionierte Dorn (6) enthält als Temperiereinrichtung (8'''') eine elektrisch betriebene Heizpatrone. Falls statt Rohren Vollprofile extrudiert werden sollen, wird der Dorn (6) vom Schneckenende demontiert und ein entsprechend angepaßter Schneckenauslauf installiert. Zum Extrudieren wird die körnige bis pulverförmige Kunststoff-Füllstoff-Mischung der Einzugzone (2) über den Einfülltrichter (12) zugeführt. Nach dem Einfüllen in den Extruder breitet sich die Masse in dem von der Schnecke (5) und der Nutenbuchse (9) belassenen Raum am Anfang der Einzugzone (2) aus. Von der Drehung der Schnecke (5) erfaßt, wird sie in die Nuten (14) der Nutenbuchse (9) gedrückt, wo sie sich verkeilt und in der Folge dieser Vorgänge pfropfenförmig in Richtung auf das Mundstück (10) zu gefördert und dabei bis zum Ende der Einzugzone (2) zunehmend komprimiert wird. Parallel zu diesen Vorgängen wird die Masse durch die Temperiereinrichtungen (8' und 8") wie bereits beschrieben, auf die für die weitere Verarbeitung geeigneten Temperaturen eingestellt. Unter dem von der Schnecke (5) aufgebauten Druck wird die Masse sodann in die Ausstoßzone (11) gedrückt und durch das Mundstück (10) extrudiert. Mittels der Temperiereinrichtungen (8''' und 8'''') wird die Masse in dieser Zone (11) auf die für das Extrudieren gewünschte Temperatur eingestellt. Dies ist weitgehend unabhängig von der Temperatur der Einzugzone (2) möglich, weil zwischen der letztgenannten und der Ausstoßzone (11) eine Wärmetrennung (13) besteht. Nach einer bevorzugten Ausführungsform rotiert der Dorn (6) beim Extrudieren von rohrförmigen Strängen mit der Drehzahl der Schnecke (5). Für den Fall, daß sich der Strang durch die mit der Rotation verbundenen Reibung zwischen Dorn (6) und Masse in unzulässigem Maße verdreht, kann der Innenmantel des Mundstücks (10) von der Einlaufseite der Masse ab über mindestens einen Teil seiner Länge mit in Extrusionsrichtung konisch auslaufenden Längsnuten (16), die bevorzugt einen bogenförmigen Querschnitt und gebrochene Kanten haben, ausgestattet sein. Eine solche Ausführungsform zeigt der Querschnitt durch ein Rohrmundstück in Fig. 2. In dieser Figur sind außerdem die Temperiereinrichtung (8''') für den Dorn (6), eine Mundstückshalterung (18), die Temperiereinrichtung (8'''), ein Luftspalt (19) sowie eine Blechverkleidung (20) zu erkennen.

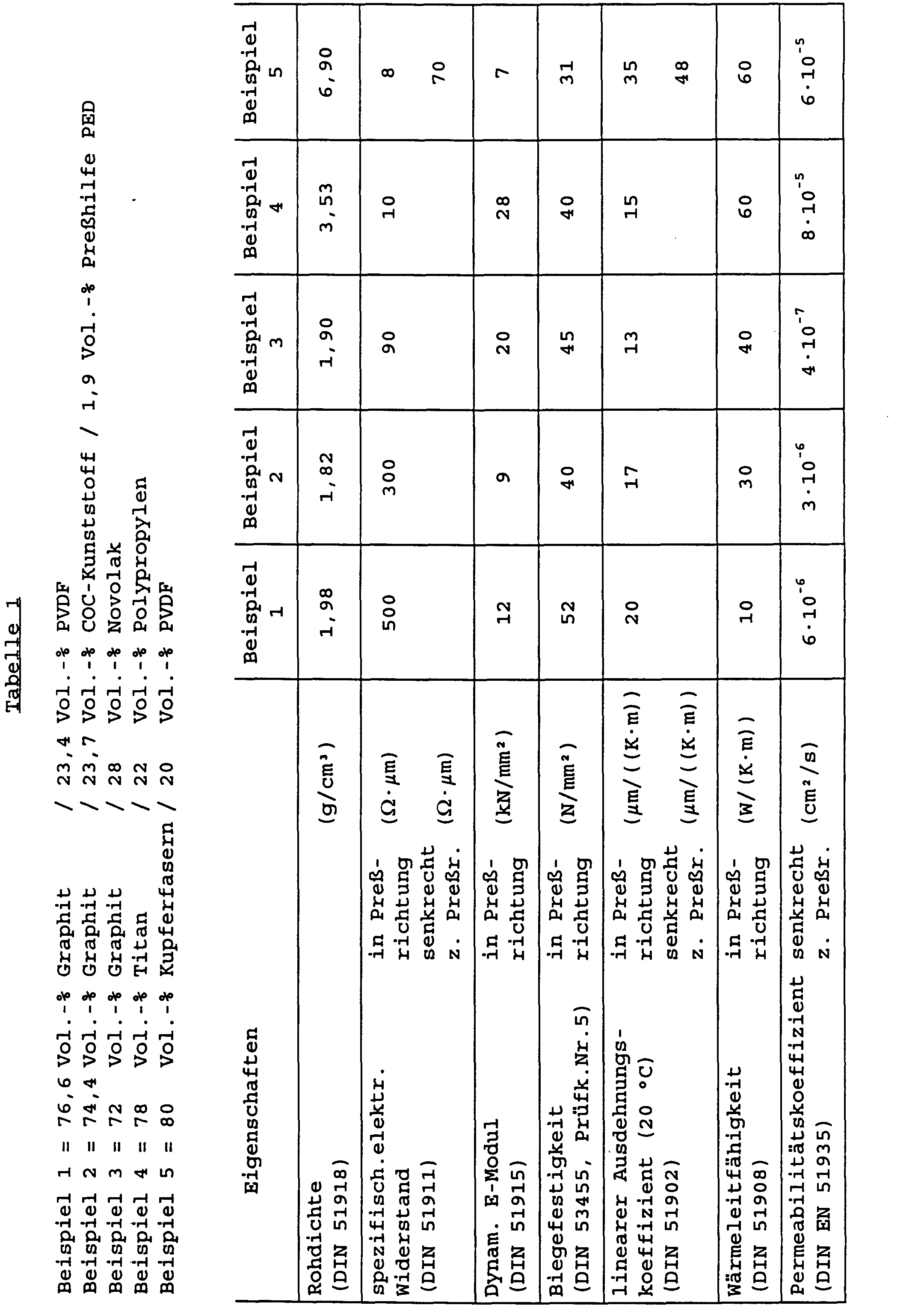

## Patentansprüche

1. Verfahren zum Herstellen von Formkörpern durch Strangpressen von Kunststoff-Füllstoff-Mischungen, bei dem in einem ersten Verfahrensschritt in einem Mischer aus einem Kunststoff und einem eine gute Wärmeleitfähigkeit aufweisenden Füller eine Mischung hergestellt wird, in der der Füllstoff gleichmäßig verteilt und der Kunststoff geschmolzen vorliegt,
**dadurch gekennzeichnet, daß**
die Mischung des ersten Verfahrensschritts mehr als 50 Volumen-% Füllstoffe enthält,
und daß in einem zweiten Verfahrensschritt die Mischung aus dem Mischer ausgetragen und erhärten gelassen wird, in einem dritten Verfahrensschritt die erhärtete Mischung gebrochen und gemahlen wird
und in einem vierten Verfahrensschritt die gemahlene Mischung oder von dieser abgetrennte und homogenisierte Fraktionen mittels eines Extruders (1) mit förderwirksamer Einzugzone (2), wie z.B. Nutenextruder zu Formkörpern extrudiert wird.

2. Verfahren nach Patentanspruch 1,
**dadurch gekennzeichnet, daß**
im vierten Verfahrensschritt ein Extruder (1) mit förderwirksamer Einzugzone (2) verwendet wird, dessen von der kunststoffhaltigen Masse berührten Teile, nämlich ein Massezuführungs- und Einfüllorgan (12), eine sich an das Massezuführungs- und Einfüllorgan (12) anschließende, mantelinnenseitig mit Längsnuten versehene, eine Förderschnecke (5) enthaltende, temperierbare zylindrische Einzugzone (2) und eine sich an diese zylindrische Zone (11) direkt anschließende, an ihrem Ende mit einem Düsenformwerkzeug (10) versehene, temperierbare Ausstoßzone (11) sind,
wobei zwischen der die Förderschnecke (5) enthaltenden zylindrischen Einzugzone (2) und der das Formgebungswerkzeug (10) enthaltenden Ausstoßzone (11) eine Wärmetrennung (13) verwirklicht ist.

3. Verfahren nach Patentanspruch 2
**dadurch gekennzeichnet, daß**
die zum Extrudieren bestimmte Mischung bereits in der mantelinnenseitig mit Nuten versehenen, eine Förderschnecke (5) enthaltenden zylindrischen Zone (2) auf Temperaturen oberhalb der Schmelztemperatur oder des Schmelztemperaturbereichs des Kunststoffes erhitzt wird.

4. Verfahren nach Patentanspruch 1,
**dadurch gekennzeichnet, daß**
für den ersten Verfahrensschritt ein heizbarer Mischer verwendet wird.

5. Verfahren nach Patentanspruch 1,
**dadurch gekennzeichnet, daß**
die erhärtete Mischung im dritten Verfahrensschritt zu Korngrößen von kleiner gleich 1 mm aufgemahlen wird.

6. Verfahren nach Patentanspruch 1,
**dadurch gekennzeichnet, daß**
für das Extrudieren eine gemahlene und klassierte Mischung der Kornfraktion größer 0,1 und kleiner 0,315 mm verwendet wird.

7. Verfahren nach Patentanspruch 1,
**dadurch gekennzeichnet, daß**
der zum Extrudieren bestimmten Mischung nach dem dritten und vor dem vierten Verfahrensschritt arteigener Kunststoff in einer Menge von bis zu acht Gewichtsprozent in Pulverform zugemischt wird.

8. Verfahren nach Patentanspruch 1,
**dadurch gekennzeichnet, daß**
eine Kunststoff-Füller-Mischung verwendet wird, deren Anteil an Füllstoff zwischen 65 und 90 Volumenprozent, bezogen auf die Mischung gleich 100 Volumenprozent, beträgt.

9. Verfahren nach Patentanspruch 1,
**dadurch gekennzeichnet, daß**
als Füllstoffe sowohl faserige als auch körnige Füllstoffe verwendet werden.

10. Verfahren nach Patentanspruch 1,
**dadurch gekennzeichnet, daß**
die größte Abmessung der in Verfahrensschritt 1 verwendeten Füllstoffteilchen 1 mm nicht übersteigt.

11. Verfahren nach Patentanspruch 1,
**dadurch gekennzeichnet, daß**
ein Füller aus der Gruppe Kohlenstoff und Graphit, Siliciumcarbid, Bornitrid, Titanoxide des Typs TiOₙ mit n < 0,5, Metall oder ein Gemisch von mindestens zwei der in diesem Anspruch vorgenannten Stoffe verwendet wird.

12. Verfahren nach Patentanspruch 11,
**dadurch gekennzeichnet, daß**
als Füller Graphit verwendet wird.

13. Verfahren nach Patentanspruch 1,
**dadurch gekennzeichnet, daß**
der im ersten Verfahrensschritt verwendete Kunststoff ein Kunststoff aus der Gruppe thermoplastisch verarbeitbare fluorhaltige Polymere, Polyolefine, Cycloolefin-Copolymere, thermoplastisch verarbeitbare Polyurethane, Silicone, Novolake, Polyarylsulfide, Polyaryletherketone, vernetzende Thermoplasten oder eine Mischung aus mindestens zwei der vorgenannten miteinander kombinierbaren Kunststoffe ist, und daß der betreffende Kunststoff oder die betreffende Kunststoffmischung eine Dauertemperaturbeständigkeit von mindestens 80 °C aufweist.

14. Verfahren nach Patentanspruch 13,
**dadurch gekennzeichnet, daß**
der im ersten Verfahrensschritt verwendete Kunststoff ein Kunststoff aus der Gruppe Polyvinylidenfluorid, Cycloolefincopolymer ist.

15. Verfahren nach Patentanspruch 1,
**dadurch gekennzeichnet, daß**
den zu mischenden Komponenten im ersten Verfahrensschritt mindestens eine Substanz aus der Gruppe Stabilisatoren, Benetzungshilfsmittel, Formgebungshilfsmittel zugesetzt wird.

16. Verfahren zum Herstellen von Platten nach Patentanspruch 1,
**dadurch gekennzeichnet, daß**
im vierten Verfahrensschritt zum Extrudieren ein Mundstück (10) verwendet wird, das einen aus einer in sich geschlossenen, gekrümmten Linie bestehenden Querschnitt hat und in dessen Inneren ein Dorn (6) angeordnet ist,
daß der Mantel des beim Extrudieren erhaltenen Hohlprofils auf mindestens einer Seite entlang seiner gesamten Länge durchtrennt, das aufgeschnittene Hohlprofil in die Ebene zu einem Band gebogen und das Band zu Platten mit einer oberen und einer unteren Oberfläche geschnitten wird.

17. Verfahren gemäß Patentanspruch 16,
**dadurch gekennzeichnet, daß**
der Mantel des Hohlprofils während des Austretens des Hohlprofils aus dem Mundstück (10) mittels einer direkt nach dem Mundstück (10) angeordneten Schneidvorrichtung durchtrennt wird.

18. Verfahren gemäß Patentanspruch 16,
**dadurch gekennzeichnet, daß**
die Platten auf mindestens einer ihrer Oberflächen mit einem Profil versehen werden.

19. Verfahren nach Patentanspruch 18,
**dadurch gekennzeichnet, daß**
das Profil mittels Prägestempeln in die Platten eingebracht wird.

20. Verfahren nach Patentanspruch 18,
**dadurch gekennzeichnet, daß**
das Profil mittels Prägewalzen erzeugt wird.

21. Verfahren nach Patentanspruch 16,
**dadurch gekennzeichnet, daß**
mindestens eine der Oberflächen der Platten mit einer Beschichtung versehen wird.

22. Verfahren nach Patentanspruch 21,
**dadurch gekennzeichnet, daß**
die Beschichtung mit einem Prägestempel aufgebracht wird.

23. Verfahren nach Patentanspruch 21,
**dadurch gekennzeichnet, daß**
die Beschichtung mit einer Prägewalze aufgebracht wird.

24. Verfahren nach Patentanspruch 21,
**dadurch gekennzeichnet, daß**
eine katalytisch wirksame Schicht aufgebracht wird.

25. Verwendung einer nach Patentanspruch 16 hergestellten Platte für elektrische oder elektrochemische Zwecke.

26. Verwendung einer nach Patentanspruch 18 hergestellten Platte für elektrische oder elektrochemische Zwecke.

27. Verwendung einer nach Patentanspruch 21 hergestellten Platte für elektrische oder elektrochemische Zwecke.

28. Verwendung einer nach Patentanspruch 24 hergestellten Platte für elektrische oder elektrochemische Zwecke.

29. Verwendung einer nach Patentanspruch 16 hergestellten Platte in Wärmeaustauschern.

30. Verwendung einer nach Patentanspruch 18 hergestellten Platte in Wärmeaustauschern.

31. Verwendung einer nach Patentanspruch 21 hergestellten Platte in Wärmeaustauschern.

32. Extruder (1) zum Durchführen des Verfahrens gemäß Patentanspruch 2, mit einem Maschinengestell (3), einer Antriebsvorrichtung (4) für die Förderwelle (5) des Extruders (1), Temperiereinrichtungen (8',8'',8''',8'''') für die vom zu extrudierenden Produkt berührten Teile sowie Meß- und Regeleinrichtungen, einem Einfüllorgan (12), einer ersten, sich an das Einfüllorgan (12) anschließenden, mantelinnenseitig mit Längsnuten versehene Zone (2) als förderwirksamer Einzugzone, in der eine Förderschnecke (5) für die zu extrudierende Masse drehbar angeordnet ist und einer zweiten, sich direkt an die mit Längsnuten versehene erste Zone (2) anschließende Zone (11),
**dadurch gekennzeichnet daß**
- die erste Zone (2) gegenüber anderen Teilen des Extruders (1) separat temperierbar ist und
- die zweite Zone (11) gegenüber der vorhergehenden Zone (2) unabhängig temperierbar ist, ein Formgebungswerkzeug (10) enthält und allein zum Ausstoßen der Masse bestimmt ist, wobei zwischen der ersten und der zweiten Zone eine Wärmetrennung (13) verwirklicht ist.

33. Extruder (1) gemäß Patentanspruch 32,
**gekennzeichnet durch**
einen mindestens im Innenraum des Formgebungswerkzeugs (10) angeordneten Dorn (6).

34. Extruder (1) gemäß Patentanspruch 33,
**dadurch gekennzeichnet, daß**
das Formgebungswerkzeug (10) in seinem Innenmantel Nuten (16) aufweist, die sich in Extrusionsrichtung erstrecken und die vor der Mundstücksöffnung in der nicht mit Nuten versehenen Innenoberfläche des Innenmantels auslaufen.

## Claims

1. Method for the manufacture of shaped bodies by extrusion moulding of plastic-filler mixtures, in which, in a first method step, there is manufactured in a mixer from a plastic and a filler having good thermal conductivity a mixture in which the filler is uniformly distributed and the plastic is present in molten form, **characterised that** the mixture of the first step contains more than 50% by volume of fillers,
in that, in a second method step, the mixture is discharged from the mixer and is allowed to harden,
in a third method step, the hardened mixture is broken up and ground
and, in a fourth method step, the ground mixture or fractions of this which have been separated off and made uniform as to grain size is extruded by means of an extruder (1) with conveying input zone (2) with e.g. grooved extruder to form moulded bodies.

2. Method according to claim 1 **characterised in that**, there is used in the fourth step, an extruder (1) with conveying input zone (2) whose parts contacted by the plastic containing material, namely a material supply and charging part (12), a temperable cylindrical input zone (2) connected to the material supply and charging part (12) provided on the inside of the casing with longitudinal grooves and containing a conveying screw (5) and a temperable output zone (11) directly connected to the cylindrical input zone (2), and provided at its end with a nozzle shaping tool (10) with a thermal barrier (13) being put into operation between the cylindrical input zone (12) containing the conveyor screw (5) and the output zone (11) containing the shaping tool (10).

3. Method according to claim 2, **characterised in that** the mixture stipulated for the extrusion is heated already in the cylindrical zone (12) containing a conveyor screw (5) and provided on the inside of the casing with grooves to temperatures above the melting temperature or the melting temperature range of the plastic.

4. Method according to claim 1, **characterised in that** a heatable mixer is used for the first method step.

5. Method according to claim 1, **characterised in that** the hardened mixture is ground up in the third method step to grain sizes of less than or equal to 1mm.

6. Method according to claim 1, **characterised in that** a ground and classified mixture of particle fraction greater than 0.1 and less tan 0.315 mm is used for the extrusion.

7. Method according to claim 1, **characterised in that**, after the third and before the fourth method step, specific plastic in powder form is mixed in with the mixture stipulated for the extrusion, in an amount of up to 8% by weight.

8. Method according to claim 1, **characterised in that** a plastic-filler mixture is used whose content of fillers amounts to between 65 and 90% by volume, related to the mixture being equal to 100% by volume.

9. Method according to claim 1, **characterised in that** both fibrous and also particulate fillers are used as fillers.

10. Method according to claim 1, **characterised in that** the largest dimension of the filler particles used in method step 1 does not exceed 1mm.

11. Method according to claim 1, **characterised in that** there is used a filler from the group of carbon and graphite, silicon carbide, boron nitride, titanium oxides of the type TiOₙ with n<0.5, metal or a mixture of at least two of the substances named previously in this claim.

12. Method according to claim 11, **characterised in that** graphite is used as filler.

13. Method according to claim 1, **characterised in that** the plastic used in the first method step is a plastic from the group of thermoplastically workable fluorine-containing polymers, polyolefins, cycloolefin-copolymers, thermoplastically processable polyurethanes, silicones, novolaks, polyarylsulfides, polyaryletherketones, cross linking thermoplasts or a mixture of at least two of the plastics previously named in this claim which are combinable with one another, and that the respective plastic or mixture of plastics has a permanent temperature resistance of at least 80°C.

14. Method according to claim 13, **characterised in that** the plastic used in the first method step is a plastic from the group of polyvinylidenfluoride, cycloolefin copolymers.

15. Metho according to claim 1, **characterised in that** there is added to the components being mixed in the first method step at least one substance from the group of stabilizers, wetting agents, shaping auxiliaries.

16. Method for the manufacture of plates according to claim 1, **characterised in that** a mouth piece (10) is used in the fourth method step for the extruding which has a cross section consisting of a closed curved outline and a mandrel (6) is arranged in its interior,
and **in that** the casing of the hollow profile obtained in the extrusion is split on at least one side along its entire length, the cut hollow profile is bent flat to a web and the web is cut to plates with an upper and a lower surface.

17. Method according to claim 16, **characterised in that** the casing of the hollow profile is split during the emergence of the hollow profile from the mouthpiece (10) by means of a cutting arrangement arranged directly after the mouthpiece (10).

18. Method according to claim 16, **characterised in that** the plates are provided on at least one of their surfaces with a profile.

19. Method according to claim 18, **characterised in that** the profile is incorporated in the plates by means of embossing stamps.

20. Method according to claim 18, **characterised in that** the profile is produced by means of embossing rollers.

21. Method according to claim 16, **characterised in that** at least one of the surfaces of the plates is provided with a coating.

22. Method according to claim 21, **characterised in that** the coating is applied with an embossing stamp.

23. Method according to claim 21, **characterised in that** the coating is applied with an embossing roller.

24. Method according to claim 21, **characterised in that** a catalytically active layer is applied.

25. Use of a plate manufactured according to claim 16 for electrical or electrochemical purposes.

26. Use of a plate manufactured according to claim 18 for electrical or electrochemical purposes.

27. Use of a plate manufactured according to claim 21 for electrical or electrochemical purposes.

28. Use of a plate manufactured according to claim 24 for electrical or electrochemical purposes.

29. Use a plate manufactured according to claim 16 in heat exchangers.

30. Use of a plate manufactured according to claim 18 in heat exchangers.

31. Use of a plate manufactured according to claim 21 in heat exchangers.

32. Extruder (1) for carrying out the method according to claim 2 having a machine frame (3), a drive arrangement (4) for the conveyor shaft (5) of the extruder, tempering arrangements (8', 8", 8"', 8"") for the parts contacted by the product to be extruded, as well as measuring and control arrangements, a supply part (12), a first zone (2) as conveying input zone which is provided with longitudinal grooves on the casing inside and connected to the filler device (12), in which zone a conveyor screw (5) for the material to be extruded is rotatably arranged, and a second zone (11) directly connected to the first zone (2) and provided with longitudinal grooves, **characterised in that** the first zone (2) is temperable separately with respect to other parts of the extruder (1) and the second zone (11) is independently temperable with respect to the foregoing zone (2), contains a shaping tool (10), is specified alone for the discharging of the material, with a thermal barrier (13) being operative between the first zone and the second zone.

33. Extruder according to claim 32, **characterised by** one mandrel (6) arranged at least in the internal space of the shaping tool (10).

34. Extruder according to claim 33, **characterised in that** the shaping tool (10) has grooves (16) in its casing inside which extend in the extrusion direction and discharge in advance of the mouthpiece in the inner surface of the casing inside not provided with grooves.

## Revendications

1. Procédé de fabrication de pièces de forme par extrusion à la presse d'un mélange d'une matière plastique et d'une charge, selon lequel
dans une première étape du procédé, on réalise dans un mélangeur un mélange d'une matière plastique et d'une charge à bonne conductivité thermique, mélange dans lequel la charge est répartie régulièrement et la matière plastique est à l'état fondu,
**caractérisé en ce que**
selon la première étape le mélange contient plus de 50 % en volume de charge, et
dans une seconde étape, on extrait le mélange et on le laisse durcir,
dans une troisième étape, on casse le mélange durci et on le broie et
dans une quatrième étape, on extrude le mélange broyé ou les fractions de celui-ci, qui ont été séparées et homogénéisées, à l'aide d'une extrudeuse (1) avec une zone d'entrée à effet de transfert (2) par exemple une extrudeuse à rainures pour extruder et réaliser des pièces de forme.

2. Procédé selon la revendication 1,
**caractérisé en ce que**
dans la quatrième étape on utilise une extrudeuse (1) avec une zone d'entrée (2) à effet de transfert dont les parties en contact avec la masse contenant de la matière plastique à savoir un organe d'alimentation en masse et de remplissage (12) est relié en aval, à une zone d'entrée (2), cylindrique, susceptible d'être mise en température, comportant une vis de transfert (5), dont la surface enveloppe intérieure est munie de rainures longitudinales,
et d'une zone cylindrique (11) directement adjacente à la précédente et dont une extrémité est munie d'un outil de formage (10) en forme de buse, cette zone d'expulsion (11) pouvant être mise en température, et on réalise une séparation thermique (13) entre la zone d'entrée (2) cylindrique munie de la vis de transfert (5) et la zone de refoulement (11) comportant l'outil de formage (10).

3. Procédé selon la revendication 2,
**caractérisé en ce que**
le mélange destiné à être extrudé est chauffé à des températures supérieures à la température de fusion ou de la plage de températures de fusion de la matière plastique, déjà dans la zone cylindrique (12) dont la surface enveloppe intérieure comporte des rainures dans la vis transporteuse (5).

4. Procédé selon la revendication 1,
**caractérisé en ce qu'**
on utilise un mélangeur chauffant pour la première étape du procédé.

5. Procédé selon la revendication 1,
**caractérisé en ce que**
dans la troisième étape, on broie le mélange durci à une granulométrie inférieure ou égale à 1 mm.

6. Procédé selon la revendication 1,
**caractérisé en ce qu'**
on utilise pour l'extrusion un mélange d'une fraction de grain supérieur à 0,1 mm et inférieur à 0,315 mm, broyé et classé.

7. Procédé selon la revendication 1,
**caractérisé en ce que**
le mélange destiné à l'extrusion est ajouté à une matière plastique pâteuse, à l'état de poudre suivant une quantité jusqu'à 8 %, entre la troisième et la quatrième étape.

8. Procédé selon la revendication 1,
**caractérisé en ce qu'**
on utilise un mélange matière plastique-charge dont la teneur en charge est comprise entre 65 et 80 % en volume, rapportée au mélange égal à 100 % en volume.

9. Procédé selon la revendication 1,
**caractérisé en ce que**
comme charge on utilise des matières à l'état de fibres ou de grains.

10. Procédé selon la revendication 1,
**caractérisé en ce que**
la plus grande dimension des particules de charge utilisées dans l'étape 1 ne dépasse pas 1 mm.

11. Procédé selon la revendication 1,
**caractérisé en ce qu'**
on utilise une charge choisie dans le groupe formé par le carbone et les graphites, le carbure de silicium, le nitrure de bore, l'oxyde de titane du type TiOₙ avec n < 0,5, des métaux ou un mélange d'au moins deux des composants cités ci-dessus.

12. Procédé selon la revendication 11,
**caractérisé en ce que**
comme charge on utilise du graphite.

13. Procédé selon la revendication 1,
**caractérisé en ce que**
la matière plastique utilisée dans la première étape est une matière plastique choisie dans le groupe comprenant :
les polymères thermoplastiques fluorés, les polyoléfines, les cyclooléfine-copolymères, les polyuréthanes thermoplastiques, les silicones, les novolaques, les polyarylsufures, les polyaryléthercétones, les thermoplastiques réticulés ou un mélange d'au moins deux des matières plastiques citées ci-dessus, prises en combinaison, et
la matière plastique ou le mélange de matière plastique concerné présente une tenue permanente en température d'au moins 80°C.

14. Procédé selon la revendication 13,
**caractérisé en ce que**
la matière plastique utilisée dans la première étape est choisie dans le groupe des polyvinylidènefluorures et des cyclooléfines copolymères.

15. Procédé selon la revendication 1,
**caractérisé en ce qu'**
aux composants à mélanger dans la première étape du procédé, on ajoute au moins une substance du groupe comprenant les stabilisateurs, les agents de réticulation, les agents de formage.

16. Procédé de fabrication de plaques selon la revendication 1,
**caractérisé en ce que**
dans la quatrième étape, on utilise pour l'extrusion un embout (10) ayant une section formée d'une ligne courbe, fermée et munie intérieurement d'une broche 6,
l'enveloppe du profil creux obtenu par extrusion est séparée sur au moins un côté sur toute sa longueur, et le profil creux, ouvert est alors rabattu dans un plan pour former un ruban et ce ruban est découpé en plaques avec une surface supérieure et une surface inférieure.

17. Procédé selon la revendication 16,
**caractérisé en ce que**
l'enveloppe du profilé creux est coupée pendant la sortie du profilé creux de l'embout (10) à l'aide d'un dispositif de coupe installé directement en aval de l'embout (10).

18. Procédé selon la revendication 16,
**caractérisé en ce que**
les plaques ont un profil sur au moins l'une de leurs surfaces.

19. Procédé selon la revendication 18,
**caractérisé en ce que**
le profil est réalisé dans les plaques par un poinçon d'impression.

20. Procédé selon la revendication 18,
**caractérisé en ce que**
le profil est réalisé à l'aide de cylindres d'impression.

21. Procédé selon la revendication 16,
**caractérisé en ce qu'**
au moins une des surfaces des plaques est munie d'un revêtement.

22. Procédé selon la revendication 21,
**caractérisé en ce que**
le revêtement est appliqué à l'aide d'un poinçon d'impression.

23. Procédé selon la revendication 21,
**caractérisé en ce que**
le revêtement est appliqué à l'aide d'un cylindre d'impression.

24. Procédé selon la revendication 21,
**caractérisé en ce que**
la couche est appliquée par voie catalytique.

25. Application d'une plaque selon la revendication 16 pour des utilisations électriques ou électrochimiques.

26. Application d'une plaque selon la revendication 18 pour des utilisations électriques ou électrochimiques.

27. Application d'une plaque selon la revendication 21 pour des utilisations électriques ou électrochimiques.

28. Application d'une plaque selon la revendication 24 pour des utilisations électriques ou électrochimiques.

29. Application d'une plaque réalisée selon la revendication 16 dans des échangeurs de chaleur.

30. Application d'une plaque réalisée selon la revendication 18 dans des échangeurs de chaleur.

31. Application d'une plaque réalisée selon la revendication 21 dans des échangeurs de chaleur.

32. Extrudeuse (1) pour la mise en oeuvre du procédé selon la revendication 2, comprenant un bâti (3), un dispositif d'entraînement (4) pour l'axe de transfert (5) de l'extrudeuse (1), des installations de mise en , température (8', 8", 8"', 8"") pour les pièces en contact avec le produit ainsi que des installations de mesure et de régulation, un organe d'introduction (12), une première zone (2) adjacente à l'organe d'introduction (12) et dont la surface enveloppe intérieure est munie de rainures longitudinales constituant une zone d'entrée avec effet de transfert logeant une vis de transfert (5) montée en rotation pour la masse à extruder ainsi qu'une seconde zone (11) directement adjacente à la première zone (2) munie de rainures longitudinales,
**caractérisée en ce que**
- la première zone (2) peut être mise en température séparément des autres parties de l'extrudeuse (1), et
- la seconde zone (11) peut être mise en température indépendamment de la zone (2) qui la précède et comporte un outil de formage (10) et elle est uniquement destinée à refouler la masse, et
- une séparation thermique (13) est prévue entre la première et la seconde zone.

33. Extrudeuse (1) selon la revendication 32,
**caractérisée en ce qu'**
au moins une broche (6) est prévue dans la cavité de l'outil de formage (10).

34. Extrudeuse (1) selon la revendication 33,
**caractérisée en ce que**
l'outil de formage (10) comporte dans son enveloppe intérieure, des rainures (16) s'étendant dans la direction d'extrusion et qui se terminent avant l'orifice de l'embout dans la surface intérieure de l'enveloppe intérieure qui ne comporte pas de rainures.
